# EUROPEAN PATENT APPLICATION

(11) **EP 4 664 281 A1**
(43) Date of publication of application: **17.12.2025**
(21) Application number: 23935157.0
(22) Date of filing: 22.12.2023
(51) Int. Cl.: G06F 9/48

(54) **RESOURCE SCHEDULING METHOD, JOB PROCESSING METHOD, SCHEDULER, SYSTEM, AND RELATED DEVICE**

(30) Priority: 25.04.2023 CN 202310473607
(71) Applicant: Huawei Technologies Co., Ltd., Shenzhen, Guangdong 518129 (CN)
(72) Inventor: PAN, Xun, Shenzhen, Guangdong 518129 (CN); ZHANG, Ming, Shenzhen, Guangdong 518129 (CN)
(74) Representative: Pfenning, Meinig & Partner mbB
(86) International application number: PCT/CN2023/140919
(87) International publication number: WO 2024/221991

(57) **Abstract**

A resource scheduling method, a job processing method, a scheduler, a system, and a related device are related, and relates to the field of computer technologies. The scheduler obtains a to-be-processed first job; determines, based on a computing power topology, a plurality of first processors from a plurality of processors included in a resource pool, where the computing power topology indicates computing powers of the plurality of processors, and a difference between computing powers of the plurality of first processors does not exceed a threshold; and schedules the plurality of first processors for the first job, where the first job is executed in parallel based on the plurality of first processors. The difference between the computing powers of the plurality of first processors scheduled for the first job does not exceed the threshold. Therefore, when the plurality of first processors execute the first job in parallel, moments at which the first processors reach a synchronization point when the first job is executed are close. This can reduce a waiting time for first processors with higher job execution efficiency, thereby avoiding prolonged waste of computing powers of these first processors.

## Description

This application claims priority to Chinese Patent Application No. 202310473607.0, filed with the China National Intellectual Property Administration on April 25, 2023 and entitled "RESOURCE SCHEDULING METHOD, JOB PROCESSING METHOD, SCHEDULER, SYSTEM, AND RELATED DEVICE", which is incorporated herein by reference in its entirety.

### TECHNICAL FIELD

This application relates to the field of computer technologies, and in particular, to a resource scheduling method, a job processing method, a scheduler, a system, and a related device.

### BACKGROUND

Currently, a job running across a plurality of nodes, such as a message passing interface (message passing interface, MPI) job, typically requires all the nodes to have a same computing resource configuration. This ensures that each of the nodes can separately execute the job using configured computing resources, and reach a synchronization point (for example, synchronizing job execution results obtained by all the nodes) at approximately the same moment.

In general, upon receiving a job submitted by a user, a scheduler may schedule for the job a plurality of processors of a same model, for example, a plurality of central processing units (central processing units, CPUs), allowing the job to be processed in parallel using the plurality of processors of the same model.

However, in actual application scenarios, even if the scheduler selects to schedule the plurality of processors of the same model to process the job in parallel, the plurality of processors reach the synchronization point at different moments, meaning that some of the processors executes the job at a faster rate, while the other processors executes the job at a slower rate, causing the processors with the faster execution rate remain idle during extended periods awaiting the slower ones to catch up to reach the synchronization point. Consequently, computing power of these faster processors goes unused over the prolonged interval.

Therefore, there is an urgent need for a resource scheduling method, to maximally avoid the prolonged waste of computing powers of some processors.

### SUMMARY

This application provides a resource scheduling method, to maximally avoid prolonged waste of computing powers of some processors. In addition, this application further provides a job processing method, a scheduler, a job processing device, a job processing system, a computer-readable storage medium, and a computer program product.

According to a first aspect, this application provides a resource scheduling method, including: A scheduler obtains a to-be-processed first job, where the first job may be, for example, an MPI job. Then, the scheduler determines, based on a computing power topology, a plurality of first processors from a plurality of processors included in a resource pool, where the computing power topology indicates computing powers of the plurality of processors. A computing power of a processor may be measured, for example, based on duration spent by the processor on executing a test job. A difference between determined computing powers of the plurality of first processors does not exceed a threshold. Finally, the scheduler schedules the plurality of first processors for the first job, where the first job is executed in parallel based on the plurality of first processors.

A deviation between the computing powers of the plurality of first processors scheduled for the first job is small. Specifically, a difference between computing powers of different first processors does not exceed the threshold. Therefore, when the plurality of first processors execute the first job in parallel, moments at which the first processors reach the synchronization point when the first job is executed are close. This can reduce a waiting time for first processors with higher job execution efficiency, thereby avoiding prolonged waste of computing powers of these first processors.

In a possible implementation, when the scheduler determines the plurality of first processors based on the computing power topology, the scheduler may specifically determine a plurality of candidate sets based on the computing power topology, where different candidate sets include a same quantity of processors. Then, the scheduler determines a computing power topology distance corresponding to each of the plurality of candidate sets, where the computing power topology distance indicates a maximum difference between computing powers of different processors included in the candidate set. In this way, the scheduler may select a first candidate set from the plurality of candidate sets, where the first candidate set includes the plurality of first processors, and the first candidate set has a smallest computing power topology distance among the plurality of candidate sets. In this case, the scheduler schedules the plurality of processors in the candidate set with the minimum computing power topology distance for the first job, so that a deviation between moments at which the plurality of processors reach the synchronization point when the first job is executed can be as small as possible. This further reduces duration in which computing powers of some processors are wasted, and helps improve resource utilization.

In a possible implementation, the plurality of first processors are located in a same computing unit. In this case, the scheduler may preferentially schedule a plurality of processors with high affinity for the first job, so that when the plurality of first processors subsequently exchange respective execution results of the first job, communication efficiency can be improved, and communication overheads can be reduced.

In a possible implementation, the scheduler may further obtain a to-be-processed second job, where the second job may also be an MPI job. In addition, when a plurality of processors in the resource pool meet a resource adjustment condition, for example, remaining available processors in the current resource pool vary greatly and do not meet a requirement of the second job, the scheduler changes, based on the computing power topology, a first target processor in the plurality of first processors scheduled for the first job to a second target processor in the resource pool, and schedules, for the second job, a plurality of remaining available second processors in the resource pool, where the plurality of second processors include the first target processor. In this case, these processors that have been scheduled for the first job are changed and rescheduled to the second job, so that overall effect of resource scheduling by the scheduler for a plurality of jobs can be improved.

In a possible implementation, when the scheduler changes the first target processor in the plurality of first processors scheduled for the first job to the second target processor in the resource pool, specifically, when the plurality of processors in the resource pool meet the resource adjustment condition, and execution duration of the first job on the first target processor is less than preset duration, the scheduler changes, based on the computing power topology, the first target processor in the plurality of first processors scheduled for the first job to the second target processor in the resource pool. In this case, before these processors scheduled for the first job are changed, an adjustment policy may be comprehensively considered based on the execution duration of the first job, to further improve overall effect of resource scheduling. This can avoid rescheduling these processors that execute the first job for a long time to the second job, thereby avoiding prolonged waste of computing powers of these processors (because these processors do not reach the synchronization point during execution of the first job, it may be considered that the computing power of these processors is wasted during execution of the first job).

In a possible implementation, when obtaining the to-be-processed first job, the scheduler may specifically obtain the first job in a target queue, where a processor configured to process a job in the target queue is determined based on the computing power topology. In this case, for a job in a specified queue, the scheduler may schedule a plurality of processors with close computing powers for parallel processing, while for a job in another queue, the scheduler is not required to schedule a plurality of processors with close computing powers for parallel processing. Alternatively, the scheduler obtains the first job in response to an enabling operation performed by a user on the first job. In this case, the scheduler may schedule, as indicated by the user, the plurality of processors with close computing powers for the first job.

In a possible implementation, the scheduler may further obtain a test job, and separately perform a computing power test on the plurality of processors based on the test job, to obtain computing power test results, so that the scheduler generates the computing power topology based on the computing power test results respectively corresponding to the plurality of processors. In this case, the scheduler may collect the computing powers of the processors by using the test job, to obtain the computing power topology through a computing power test process.

In a possible implementation, the computing power of the first processor is determined based on a time spent by the first processor on executing the test job. In this case, a computing power of a processor may be measured based on a time spent by the processor on executing the test job, so that the computing power of the processor is determined.

According to a second aspect, this application provides a job processing method. The method includes: obtaining a to-be-processed first job; scheduling, for the first job, a plurality of first processors from a resource pool based on a computing power topology, where the resource pool includes a plurality of processors, the computing power topology indicates computing powers of the plurality of processors, and a difference between the computing powers of the plurality of first processors does not exceed a threshold; and executing the first job in parallel by using the plurality of first processors. A deviation between the computing powers of the plurality of first processors that execute the first job in parallel is small. Specifically, a difference between computing powers of different first processors does not exceed the threshold. Therefore, when the plurality of first processors execute the first job in parallel, moments at which the first processors reach the synchronization point when the first job is executed are close. This can reduce a waiting time for first processors with higher job execution efficiency, thereby avoiding prolonged waste of computing powers of these first processors.

According to a third aspect, this application provides a scheduler. The scheduler includes: an obtaining module, configured to obtain a to-be-processed first job; a determining module, configured to determine, from a resource pool, a plurality of first processors based on a computing power topology, where the resource pool includes a plurality of processors, the computing power topology indicates computing powers of the plurality of processors, and a difference between computing powers of the plurality of first processors does not exceed a threshold; and a scheduling module, configured to schedule the plurality of first processors for the first job, where the first job is executed in parallel based on the plurality of first processors.

In a possible implementation, the determining module is configured to: determine a plurality of candidate sets based on the computing power topology, where different candidate sets include a same quantity of processors; determine a computing power topology distance corresponding to each of the plurality of candidate sets, where the computing power topology distance indicates a maximum difference between computing powers of different processors included in the candidate set; and select a first candidate set from the plurality of candidate sets, where the first candidate set includes the plurality of first processors, and the first candidate set has a smallest computing power topology distance among the plurality of candidate sets.

In a possible implementation, the plurality of first processors are located in a same computing unit.

In a possible implementation, the obtaining module is further configured to obtain a to-be-processed second job. The scheduling module is further configured to: when a plurality of processors in the resource pool meet a resource adjustment condition, change, based on the computing power topology, a first target processor in the plurality of first processors scheduled for the first job to a second target processor in the resource pool; and schedule, for the second job, a plurality of remaining available second processors in the resource pool, where the plurality of second processors include the first target processor, and the plurality of second processors include the first target processor.

In a possible implementation, the scheduling module is specifically configured to: when the plurality of processors in the resource pool meet the resource adjustment condition, and execution duration of the first job on the first target processor is less than preset duration, change, based on the computing power topology, the first target processor in the plurality of first processors scheduled for the first job to the second target processor in the resource pool.

In a possible implementation, the obtaining module is specifically configured to: obtain the first job in a target queue, where a processor configured to process a job in the target queue is determined based on the computing power topology; or obtain the first job in response to an enabling operation performed by a user on the first job.

In a possible implementation, the obtaining module is further configured to: obtain a test job; separately perform a computing power test on the plurality of processors based on the test job, to obtain computing power test results; and generate the computing power topology based on the computing power test results respectively corresponding to the plurality of processors.

In a possible implementation, the computing power of the first processor is determined based on a time spent by the first processor on executing the test job.

The scheduler provided in the third aspect corresponds to the resource scheduling method provided in the first aspect. Therefore, for technical effects of any one of the third aspect and the implementations of the third aspect, refer to the technical effects of the first aspect and the corresponding implementations of the first aspect.

According to a fourth aspect, this application provides a job processing device. The job processing device includes: an obtaining module, configured to obtain a to-be-processed first job; a scheduling module, configured to schedule, for the first job, a plurality of first processors from a resource pool based on a computing power topology, where the resource pool includes a plurality of processors, the computing power topology indicates computing powers of the plurality of processors, and a difference between the computing powers of the plurality of first processors does not exceed a threshold; and an execution module, configured to execute the first job in parallel by using the plurality of first processors.

The job processing device provided in the fourth aspect corresponds to the job processing method provided in the second aspect. Therefore, for technical effects of the fourth aspect, refer to the technical effects of the second aspect.

According to a fifth aspect, this application provides a scheduler. The scheduler includes a processor, a memory, and a display. The processor and the memory communicate with each other. The processor is configured to execute instructions stored in the memory, to cause the scheduler to perform the resource scheduling method according to any one of the first aspect or the implementations of the first aspect. It should be noted that, the memory may be integrated into the processor, or may be independent of the processor. The scheduler may further include a bus. The processor is connected to the memory over the bus. The memory may include a readable memory and a random access memory.

According to a sixth aspect, this application provides a job processing system, including the scheduler provided in the fifth aspect and a resource pool, where the resource pool includes a plurality of processors.

According to a seventh aspect, this application provides a computer-readable storage medium. The computer-readable storage medium stores instructions. When the instructions are run on a computing device, the computing device is caused to perform the operation steps of the resource scheduling method according to any one of the first aspect or the implementations of the first aspect, or the computing device is caused to perform the operation steps of the job processing method according to the second aspect.

According to an eighth aspect, this application provides a computer program product including instructions. When the computer program product is run on a computing device, the computing device is caused to perform the operation steps of the resource scheduling method according to any one of the first aspect or the implementations of the first aspect, or the computing device is caused to perform the operation steps of the job processing method according to the second aspect.

Based on the implementations provided in the foregoing aspects, this application may further combine technologies in this application to provide more implementations.

### BRIEF DESCRIPTION OF DRAWINGS

FIG. 1 is a diagram of a structure of an example job processing system according to this application;
FIG. 2 is a diagram in which a processor A and a processor B reach a synchronization point at different moments;
FIG. 3 is a schematic flowchart of a resource scheduling method according to this application;
FIG. 4 is a diagram of an example computing power topology according to this application;
FIG. 5 is a diagram of determining four candidate sets and a computing power topology distance based on a computing power topology according to this application;
FIG. 6A is a schematic flowchart of another resource scheduling method according to this application;
FIG. 6B is a diagram in which a scheduler 101 schedules computing resources to a first job and a second job;
FIG. 7 is a diagram of a structure of a scheduler according to this application;
FIG. 8 is a diagram of a structure of a job processing device according to this application; and
FIG. 9 is a diagram of a hardware structure of a scheduler according to this application.

### DESCRIPTION OF EMBODIMENTS

To avoid prolonged waste of computing powers of some processors, this application provides a resource scheduling method, in which based on computing powers of a plurality of processors in a resource pool, a plurality of first processors with close computing powers are determined from the resource pool and scheduled to a job. In this case, the plurality of first processors with close computing powers are used to execute the job in parallel, so that moments at which the plurality of processors reach the synchronization point when the job is separately executed are close. This can reduce a waiting time for processors with higher job execution efficiency, thereby avoiding prolonged waste of computing powers of these processors.

The following describes technical solutions in this application with reference to accompanying drawings in embodiments of this application.

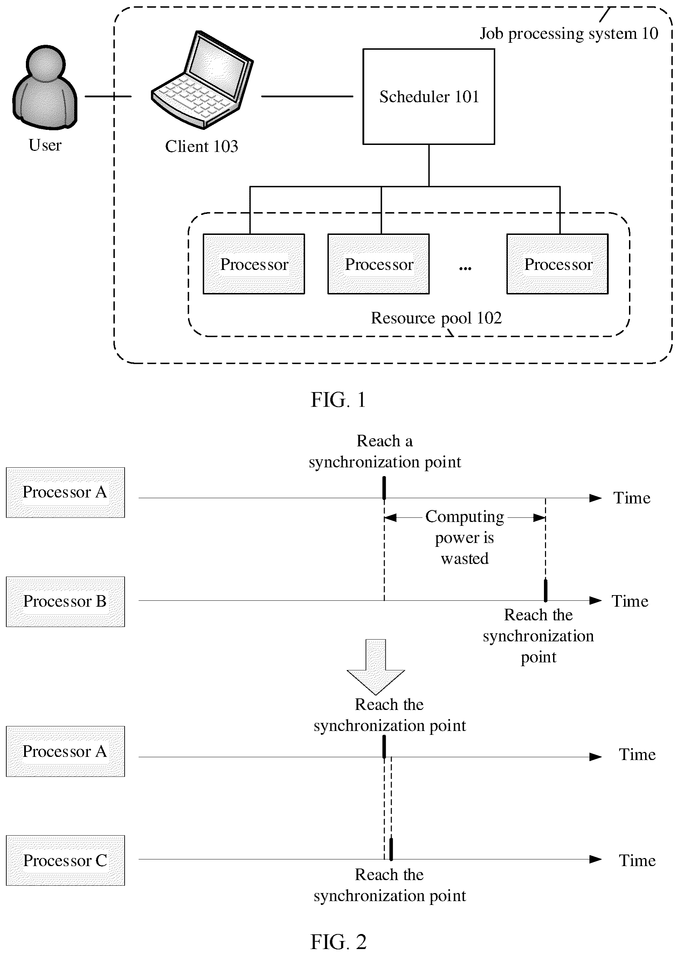

FIG. 1 is a diagram of a structure of an example job processing system 10 according to an embodiment of this application.

As shown in FIG. 1, the job processing system 10 includes a scheduler 101 and a resource pool 102. The scheduler 101 and the resource pool 102 may establish a communication connection in a wired or wireless manner. During actual application, the job processing system 10 may be an open source system or a commercial system. Accordingly, the scheduler 101 may be a scheduling tool such as SLURM, OpenPBS, or YARN in the open source system, or may be a scheduling tool such as LSF or PBS Pro in the commercial system.

The job processing system 10 may further provide a client 103 externally. The client 103 may be an application (application) deployed on a user-side device, or may be a web browser, or the like, and is configured to: receive a job provided by a user, and forward the job to the scheduler 101. The job submitted by the user may be a job that requires running across a plurality of nodes, for example, an MPI job. The job requires being executed in parallel by using the plurality of nodes, and execution results obtained through job execution on the nodes are aggregated when a synchronization point is reached. For example, the user may submit a job for training an artificial intelligence (artificial intelligence, AI) model. Because there are a large quantity of samples for training the AI model, a plurality of computing nodes may be used to train the AI model in parallel. Each computing node trains the AI model by using some samples. When a round of model training is completed (that is, the synchronization point is reached), the computing nodes aggregate parameters of the AI model currently obtained through training, and update the AI model on the computing nodes based on an aggregation result, so that the computing nodes continue to perform a model training process by using an updated AI model.

The scheduler 101 is configured to schedule a resource to the job sent by the client 103, and specifically, may schedule a corresponding resource from the resource pool 103 to execute the job in parallel.

The resource pool 102 includes a plurality of processors, for example, a plurality of CPUs. Models of the plurality of processors may be the same or may be different, so that the plurality of processors in the resource pool 102 may be scheduled by the scheduler 101 to execute in parallel the job submitted by the user. During actual application, the resource pool 102 may further include a storage resource such as a memory or a hard disk, and include a network resource such as bandwidth, so that the scheduler 101 may further schedule the storage resource and the network resource of the resource pool together to the job submitted by the user.

Generally, the scheduler 101 evaluates a computing power of a processor based on a model of the processor. Therefore, for a plurality of processors with a same model in the resource pool 102, the scheduler 101 determines that computing powers of the plurality of processors are the same. However, in an actual application scenario, computing powers of different processors of a same model may be different due to fluctuation of a production process or another reason. For example, in a process of producing a processor A of a same model, a production process is stable, so that a deviation between an actual high-speed circuit and an expected high-speed circuit is small. However, in a process of producing a processor B of a same model, production fluctuates, so that a deviation between an actual high-speed circuit and an expected high-speed circuit is large. In this case, a computing power of the processor A is higher than a computing power of the processor B. In other words, under a same running condition, job execution efficiency of the processor A is higher than job execution efficiency of the processor B. Correspondingly, when the scheduler 101 schedules the processor A and the processor B of a same model to execute a job in parallel, for example, the processor A may take 12 hours to execute the job and reach the synchronization point. After completing the job, the processor A starts to wait for the processor B to execute the job and reach the synchronization point. It is assumed that the processor B takes 18 hours to execute the job and reach the synchronization point, so the processor A needs to wait for an additional 6 hours after executing the job and reaching the synchronization point, as shown in the upper part of FIG. 2. Consequently, the computing power of the processor A is idle in the 6 hours, that is, the computing power of the processor A is wasted for a long time. In addition, when the scheduler 101 schedules more processors of a same model to execute the job, computing powers of the more processors are wasted for a long time.

Therefore, this application provides a resource scheduling method, to avoid prolonged waste of computing powers of the processor A. During specific implementation, after obtaining the job submitted by the user, the scheduler 101 may determine, from the resource pool 102 based on the computing power topology that indicates the computing powers of the plurality of processors in the resource pool 102, the plurality of processors configured to execute the job in parallel. A difference between the computing powers of the plurality of processors does not exceed a threshold, for example, a difference between a maximum computing power and a minimum computing power in the computing powers of the plurality of processors is less than the threshold, so that the scheduler 101 schedules the plurality of processors to the job, and the plurality of processors are used to execute the job in parallel.

A deviation between the computing powers of the plurality of processors scheduled for the job is small, and specifically does not exceed the threshold. Therefore, when the plurality of processors execute the job in parallel, moments at which the processors reach the synchronization point when the job is executed are close. This can reduce a waiting time for processors with higher job execution efficiency, thereby avoiding prolonged waste of computing powers of these processors. That the scheduler 101 schedules two processors in the resource pool 102 to execute a job in parallel is still used as an example. It is assumed that the scheduler 101 schedules the processor A and a processor C in the resource pool 102 to execute the job in parallel, and a difference between computing powers of the processor A and the processor C is small, so that the processor A may take 12 hours to execute the job and reach the synchronization point, and the processor C may take 12.1 hours to execute the job and reach the synchronization point. Therefore, the processor A needs to wait for only 0.1 extra hour (that is, 6 minutes) after executing the job and reaching the synchronization point. As shown in the lower part of FIG. 2, compared with the case that the processor A needs to wait for 6 extra hours (waiting for the processor B to execute the job and reach the synchronization point) after executing the job and reaching the synchronization point, a time in which the computing power of the processor A is wasted can be effectively reduced, and overall job execution efficiency can be improved.

For example, the scheduler 101 may be implemented by using software or hardware.

In a first example, when the scheduler 101 is implemented by using software, for example, the scheduler 101 may be implemented by using at least one of a virtual machine, a container, or a computing engine.

In a second example, when the scheduler 101 is implemented by using hardware, the scheduler 101 may be implemented by using at least one physical device including a processor. The processor may be any one or any combination of a central processing unit (central processing unit, CPU), an application-specific integrated circuit (application-specific integrated circuit, ASIC), a programmable logic device (programmable logic device, PLD), a complex programmable logic device (complex programmable logic device, CPLD), a field-programmable gate array (field-programmable gate array, FPGA), a generic array logic (generic array logic, GAL), a system on chip (system on chip, SoC), a software-defined infrastructure (software-defined infrastructure, SDI) chip, an artificial intelligence (artificial intelligence, AI) chip, a data processing unit (data processing unit, DPU), and the like. In addition, the scheduler 101 may include one or more processors, and may include one or more types of processors. Specifically, the quantity and types of processors may be set according to a service requirement of an actual application. This is not limited in this embodiment.

It should be noted that the job processing system 10 shown in FIG. 1 is merely used as an example for description. In another applicable job processing system, the job processing system may have more devices, for example, a device configured to store a scheduling log, to support the job processing system to have more functions. Alternatively, the job processing system may schedule, for some jobs (for example, jobs of paid users), a plurality of processors with close computing powers to execute the jobs in parallel, and may schedule, for the other jobs (jobs of non-paid users), a plurality of processors with greatly different computing powers to execute the jobs in parallel. Alternatively, the job processing system may schedule a processor in the resource pool 102 for some jobs (jobs running on a single node) submitted by the user to execute the jobs. A specific structure of the foregoing job processing system and an applicable application scenario thereof are not limited in this application.

For ease of understanding, the following describes embodiments of the resource scheduling method provided in this application with reference to the accompanying drawings.

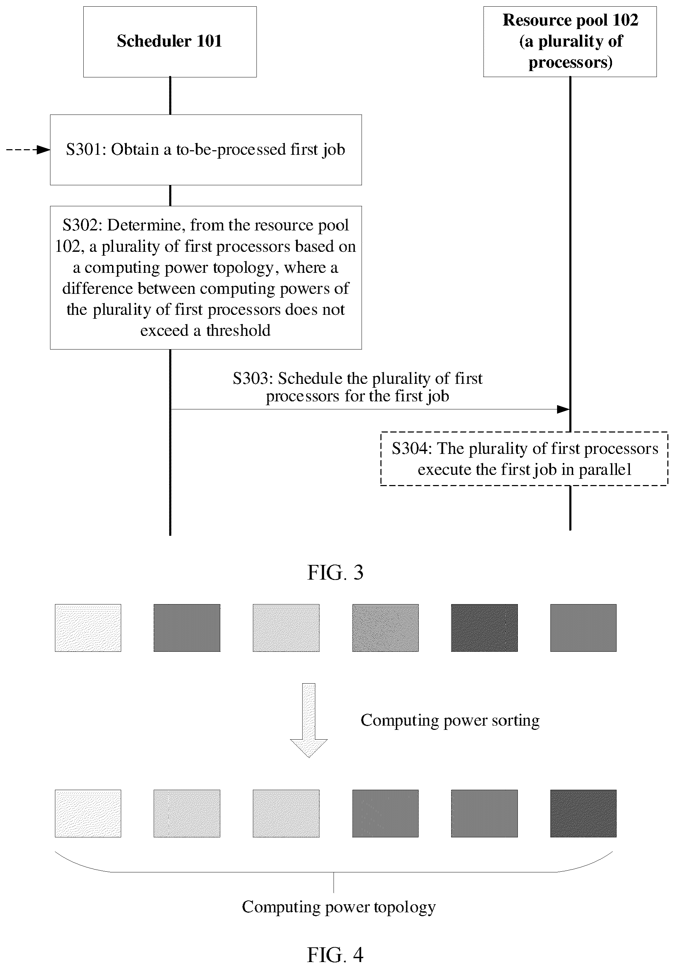

FIG. 3 is a schematic flowchart of a resource scheduling method according to an embodiment of this application. The method may be applied to the job processing system 10 in FIG. 1, or may be applied to another applicable job processing system. For ease of description, in this embodiment, the job processing system 10 shown in FIG. 1 is used as an example for description.

The resource scheduling method shown in FIG. 3 may specifically include the following steps.

S301: A scheduler 101 obtains a to-be-processed first job.

The first job may be a job that requires running across a plurality of nodes, for example, an MPI job. During actual application, the first job may be a job for training an AI model, a job for distributed computing, or the like.

In this embodiment, the following several example implementations are provided.

In a first possible implementation, the job processing system 10 provides a client 103 externally, and a user may submit the first job to the job processing system 10 by using the client 103. During specific implementation, the client 103 may present, to the user, an interaction interface used to submit a job, so that the user uploads and submits the first job on the interaction interface (for example, submits the first job by using a command line). Then, the client 103 may forward the first job submitted by the user to the scheduler 101, so that the scheduler 101 schedules a plurality of corresponding processors for the first job.

In an actual application scenario, because the user does not require all submitted jobs to be executed by using the plurality of nodes, a difference between times spent on the jobs is small. Therefore, when submitting the first job on the interaction interface, the user may further perform an enabling operation on the first job, for example, add an optimization label for computing power scheduling to the first job, where the optimization label indicates to execute the first job in parallel by using a plurality of processors with a small computing power difference. Therefore, the client 103 may send the first job to the scheduler 101, and request, based on the enabling operation (for example, adding the optimization label) performed by the user, the scheduler 101 to schedule, to the job, the plurality of processors with the small computing power difference.

In a second possible implementation, the client 103 may write the first job submitted by the user into a target queue in the scheduler, so that the scheduler 101 may obtain the first job from the target queue, and schedule, for the first job, a plurality of processors with a small computing power difference. During actual application, because not all jobs submitted by the user are required to be executed by using the plurality of nodes, a difference between times spent on the jobs is small. Therefore, a plurality of queues may be configured in the scheduler 101, each queue may be used to cache a job submitted by the user. A part of the plurality of queues is the target queue. In this case, for each job cached in the target queue, the scheduler 101 may schedule the plurality of processors with the small computing power difference to execute the job in parallel, while for each job cached in other queues, the scheduler 101 may schedule one processor to execute the job, or schedule a plurality of processors with a large computing power difference to execute the job in parallel. The target queue in the scheduler 101 may be configured by loading a corresponding configuration file.

It should be noted that the foregoing multiple implementations are merely used as some examples for description. In another embodiment, the scheduler 101 may obtain the to-be-processed first job in another implementation. This is not limited herein.

S302: The scheduler 101 determines, from a resource pool 102, a plurality of first processors based on a computing power topology, where the resource pool 102 includes a plurality of processors, the computing power topology indicates computing powers of the plurality of processors, and a difference between determined computing powers of the plurality of first processors does not exceed a threshold.

S303: The scheduler 101 schedules the plurality of first processors for the first job, where the first job is executed in parallel based on the plurality of first processors.

In this embodiment, for the plurality of processors in the resource pool 102, the computing powers of the plurality of processors may be collected in advance, and the corresponding computing power topology is generated based on the computing powers of the processors. A computing power of a processor may be measured based on a time spent by the processor on executing a test job. A longer time spent indicates a lower computing power of the processor, and a shorter time spent indicates a higher computing power of the processor. In another embodiment, the computing power of the processor may alternatively be represented in another manner. This is not limited herein. The test job is a job used to test a computing power of a processor.

As an implementation example of generating the computing power topology, it is assumed that the computing power topology is generated by the scheduler 101. In this case, the scheduler 101 may obtain the test job, and the test job may be, for example, provided by a skilled person to the scheduler 101. Then, the scheduler 101 may separately perform a computing power test on the processors in the resource pool 102 based on the test job, to obtain computing power test results. The plurality of processors in the resource pool 102 may be processors of a same model, or may be processors of different models.

Specifically, the scheduler 101 may distribute the test job to the processors. With sufficient resources such as memory and bandwidth, the processors execute the test job based on a same job execution program and running power, count duration required for executing the test job by the processors, and then return the duration required for executing the test job as the computing power test results to the scheduler 101. In this way, the scheduler 101 may generate the computing power topology based on the computing power test results corresponding to the processors. For example, as shown in FIG. 4, the scheduler 101 may sort the duration required for executing the test job by the processors, and generate the computing power topology based on a sorting status. The computing power topology shown in FIG. 4 includes a plurality of nodes, and each node includes related information of one processor. The related information may be specifically [a computing unit identifier, a processor identifier, and computing duration]. The computing unit identifier indicates a computing unit to which a processor belongs. The computing unit may be, for example, a chip or a computer. In other words, the computing unit identifier may indicate a specific chip or computer to which the processor belongs.

In another implementation, another device in the job processing system 10 may generate the computing power topology, and send the generated computing power topology to the scheduler 101. This is not limited herein. In addition, a representation form of the computing power topology is not limited to the foregoing implementation examples.

After obtaining the first job, the scheduler 101 may determine, from the resource pool 102, a plurality of processors with close computing powers based on the computing power topology. Specifically, the scheduler 101 may select, from the plurality of processors in the resource pool 102 based on a requirement of the first job for a quantity of processors, a corresponding quantity of processors with computing powers between which a difference does not exceed the threshold. For ease of differentiation and description, the plurality of processors are referred to as first processors in the following.

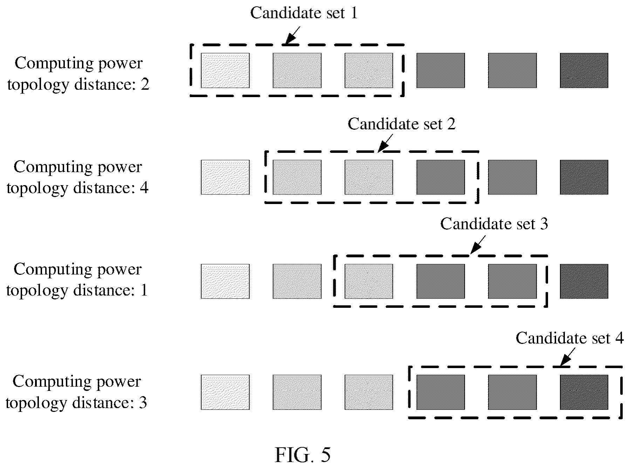

In a possible implementation, the scheduler 101 may determine a plurality of candidate sets based on the computing power topology, where different candidate sets include a same quantity of processors. For example, a quantity of processors included in each candidate set is the quantity of processors required for executing the first job in parallel. For example, it is assumed that the computing power topology is shown in FIG. 4, and the quantity of processors required for executing the first job in parallel is three. In this case, the scheduler 101 may determine four candidate sets based on the computing power topology, as shown in FIG. 5.

Then, the scheduler 101 may determine a computing power topology distance corresponding to each of the plurality of candidate sets, where the computing power topology distance indicates a maximum difference between computing powers of different processors included in the candidate set. For example, a computing power of a processor is measured based on duration required for executing the test job by the processor. The computing power topology distance corresponding to each candidate set is a difference between maximum computing duration and minimum computing duration that correspond to the plurality of processors included in the candidate set. Alternatively, the computing power topology distance is obtained through calculation based on the difference. For example, the computing power topology distance is obtained by performing normalization processing on the difference.

Finally, the scheduler 101 may select a first candidate set from the plurality of candidate sets, and allocate a plurality of processors in the first candidate set as first processors for the first job. During specific implementation, the scheduler 101 may bind the plurality of first processors to the first job, so that the first processors can execute the first job based on a binding relationship.

In a first implementation example, the first candidate set includes the plurality of first processors, and the first candidate set has a smallest computing power topology distance among the plurality of candidate sets. In this case, the scheduler 101 may determine, for the first job, a plurality of first processors with closest computing powers in the resource pool 102, to subsequently schedule the plurality of first processors for the first job to avoid prolonged waste of computing powers of some processors. For example, it is assumed that computing power topology distances corresponding to the four candidate sets in FIG. 5 are 2, 4, 1, and 3. Because the computing power topology distance corresponding to the candidate set 3 is the smallest, the scheduler 101 may allocate processors included in the candidate set 3 to the first job as the first processors.

When two or more candidate sets have a smallest computing power topology distance among the plurality of candidate sets, the scheduler 101 may randomly select one candidate set from the two or more candidate sets as the first candidate set. Alternatively, the scheduler 101 may select, from the two or more candidate sets, a candidate set in which average computing power of a plurality of processors is large as the first candidate set. Alternatively, the scheduler 101 may preferentially select, from the two or more candidate sets, a candidate set in which a plurality of processors are located in a same computing unit as the first candidate set.

In a second implementation example, in an actual application scenario, the first job may have a requirement on a minimum computing power of a processor, or may have a requirement on an overall time spent on executing the first job. Therefore, the scheduler 101 may first determine, from the plurality of candidate sets, M candidate sets that can meet the computing power requirement of the first job, where M is a positive integer greater than 0; and then determine a candidate set with a smallest computing power topology distance from the M candidate sets based on computing power topology distances respectively corresponding to the M candidate sets, and use the candidate set as the first candidate set.

In a third implementation example, the plurality of candidate sets determined by the scheduler 101 are all candidate sets in which the computing powers of the processors meet the requirement of the first job. In this case, the scheduler 101 may determine, from the plurality of candidate sets, one or more candidate sets whose computing power topology distance is less than the threshold, and then randomly select one candidate set from the one or more candidate sets as the first candidate set. Alternatively, the scheduler 101 may select, from the one or more candidate sets, a candidate set in which average computing power of a plurality of processors is large as the first candidate set. For example, it is assumed that computing power topology distances respectively corresponding to the candidate set 1 and the candidate set 3 are less than the threshold. In this case, the scheduler 101 may preferentially select the candidate set 3 with a large average computing power as the first candidate set. Alternatively, the scheduler 101 may select, from the one or more candidate sets, a candidate set in which a plurality of processors are located in a same computing unit as the first candidate set. For example, it is assumed that computing power topology distances respectively corresponding to the candidate set 1 and the candidate set 3 are less than the threshold, a plurality of processors in the candidate set 1 are located on a same chip, and a plurality of processors in the candidate set 2 are located on different chips. In this case, the scheduler 101 may select the candidate set 1 as the first candidate set. In this way, when the plurality of first processors subsequently exchange their respective execution results of the first job, communication efficiency can be improved, and communication overheads can be reduced.

It may be understood that the foregoing multiple implementation examples of determining the first candidate set are merely used as some examples for description. During actual application, the scheduler 101 may alternatively determine the first candidate set in another manner. This is not limited in this embodiment.

After the scheduler 101 schedules the plurality of first processors for the first job, the plurality of first processors may start to execute the first job in parallel. Therefore, this embodiment may further include the following steps.

S304: The plurality of first processors execute the first job in parallel.

It may be understood that, a deviation between the computing powers of the plurality of first processors scheduled for the first job is small. Specifically, a difference between computing powers of different first processors does not exceed the threshold. Therefore, when the plurality of first processors execute the first job in parallel, moments at which the first processors reach the synchronization point when the first job is executed are close. This can reduce a waiting time for first processors with higher job execution efficiency, thereby avoiding prolonged waste of computing powers of these processors.

During actual application, in addition to the plurality of processors, the resource pool 102 may further include a storage resource, a network resource, and the like. Therefore, when scheduling a resource for the first job, the scheduler 101 may schedule the plurality of processors for the first job based on the foregoing process, and further schedule a corresponding storage resource and network resource for the first job based on a requirement of the first job for the storage resource and the network resource. When the plurality of processors scheduled for the first job are determined, the corresponding storage resource and network resource are scheduled based on the plurality of processors, and there are related applications in an actual scenario. Details are not described herein again.

In the embodiment shown in FIG. 3, the implementation process in which the scheduler 101 schedules the plurality of processors for the first job when there are sufficient computing resources in the resource pool 102 is mainly described. In an actual application scenario, as the scheduler continuously schedules resources for a plurality of jobs, resource occupation of the plurality of processors in the resource pool 102 continuously change. Consequently, during scheduling of a computing resource for another job by the scheduler 101, a difference between computing powers of a plurality of remaining schedulable processors in the resource pool 102 is large. In this case, when the scheduler 101 schedules, for the another job, at least one processor from the plurality of remaining processors, moments at which the processors execute the another job and reach a synchronization point may vary greatly. Therefore, in a further possible implementation, the scheduler 101 may further adjust an allocated computing resource to optimize overall effect of resource scheduling for the plurality of jobs.

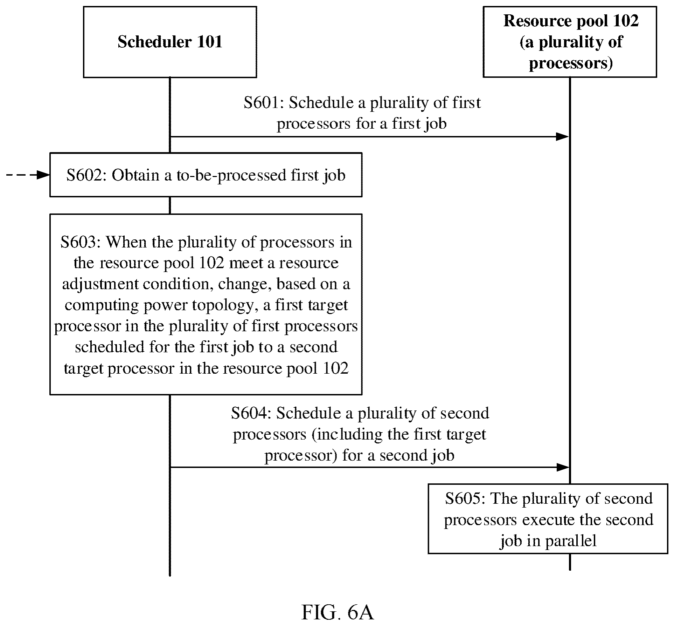

FIG. 6A is a schematic flowchart of another resource scheduling method according to an embodiment of this application. As shown in FIG. 6A, the method may specifically include the following steps.

S601: A scheduler 101 schedules a plurality of first processors for a first job.

In this embodiment, for a specific implementation process of step S601, refer to related descriptions in the embodiment shown in FIG. 3. Details are not described herein again.

S602: The scheduler 101 obtains a to-be-processed second job.

In this embodiment, the second job is still a job that requires running across a plurality of nodes, for example, an MPI job.

For a specific implementation process of step S602, refer to related descriptions of step S301. Details are not described herein again.

S603: When a plurality of processors in a resource pool 102 meet a resource adjustment condition, the scheduler 101 changes, based on a computing power topology, a first target processor in the plurality of first processors scheduled for the first job to a second target processor in the resource pool 102.

S604: The scheduler 101 schedules, for the second job, a plurality of remaining available second processors in the resource pool 102, where the plurality of second processors include the first target processor.

After obtaining the second job, the scheduler 101 may first determine, based on the computing power topology, whether there are a plurality of processors with close computing powers (a difference between the computing powers does not exceed a threshold) in a plurality of currently remaining processors in the resource pool 102 to execute the second job.

If there are a plurality of processors with close computing powers in the plurality of currently remaining processors in the resource pool 102 to execute the second job, the scheduler 101 may schedule the plurality of second processors for the second job according to the resource scheduling method in the embodiment shown in FIG. 3.

If there are not a plurality of processors with close computing powers in the plurality of currently remaining processors in the resource pool 102 to execute the second job, the scheduler 101 may determine that the plurality of processors in the current resource pool 102 meet the resource adjustment condition, and accordingly change the plurality of processors that have been scheduled for the first job.

In a possible implementation, the scheduler 101 may first determine whether there are a plurality of processors, with computing powers between which a difference does not exceed the threshold, that can meet a requirement of the second job in the remaining available processors in the resource pool 102 after N (N is a positive integer) first processors in the plurality of first processors that have been scheduled for the first job are reclaimed (reclaimed to the resource pool 102). For ease of differentiation, the N first processors are referred to as N first target processors in the following. If there are a plurality of processors, with computing powers between which a difference does not exceed the threshold, that can meet the requirement of the second job in the remaining available processors in the resource pool 102, the scheduler 101 may reschedule, for the second job, the N first target processors that have been scheduled for the first job, and select N second target processors from the remaining available processors in the current resource pool 102 and schedule the N second target processors for the first job. The N second target processors may start to execute the first job again. In addition, the scheduler 101 further schedules, for the second job based on the computing power topology, a specific quantity of processors from the remaining available processors in the resource pool 102, so that a quantity of processors scheduled for the second job meets a requirement for executing the second job in parallel. For ease of differentiation, the plurality of processors scheduled for the second job are referred to as second processors in the following. A difference between computing powers of all the second processors scheduled for the second job does not exceed the threshold. If there are not a plurality of processors, with computing powers between which a difference does not exceed the threshold, that can meet the requirement of the second job in the remaining available processors in the resource pool 102, the scheduler 101 may schedule, for the second job, a plurality of second processors whose computing powers are as close as possible from the remaining available processors in the current resource pool 102. In this case, a difference between the computing powers of the plurality of second processors scheduled for the second job is allowed to exceed the threshold.

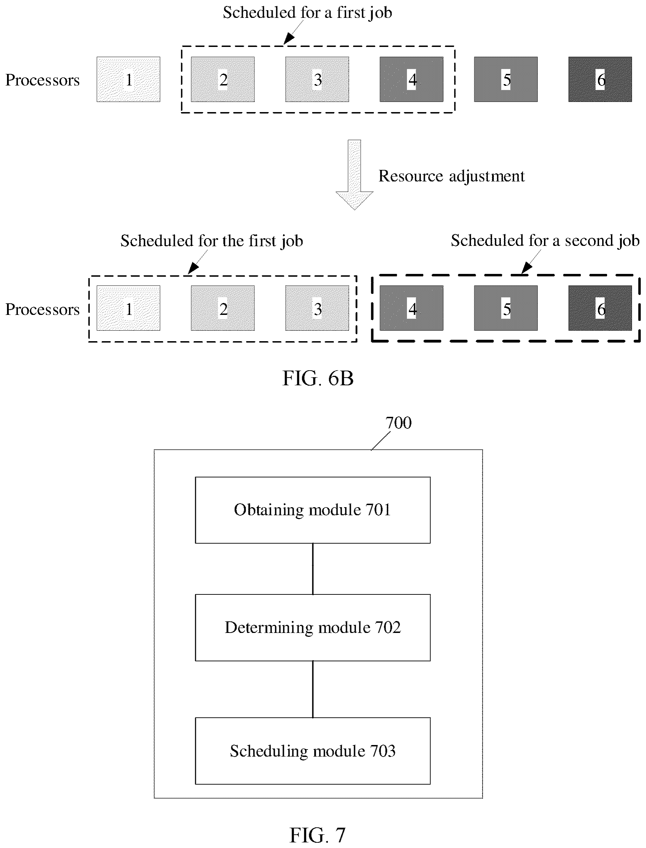

For example, it is assumed that the plurality of first processors scheduled by the scheduler 101 for the first job are a processor 2, a processor 3, and a processor 4 shown in FIG. 6B, and the second job requires being executed in parallel by three processors. In this case, the scheduler 101 may determine whether there are three processors, with close computing powers, that can meet the requirement of the second job among a processor 1, the processor 4, a processor 5, and a processor 6 available and remaining in the resource pool 102, after the processor 4 (namely, the foregoing first target processor) is reclaimed. The scheduler 101 may determine, based on the computing power topology, that a difference between computing powers of the processor 4, the processor 5, and the processor 6 is small. Therefore, the scheduler 101 may schedule the processor 4, the processor 5, and the processor 6 for the second job, and schedule the processor 1 (namely, the second target processor) for the first job. In this case, the plurality of processors scheduled for the first job are changed to the processor 1, the processor 2, and the processor 3.

For example, in a process of scheduling N processors from the remaining available processors in the current resource pool 102 for the first job, the scheduler 101 may first determine whether there are N other available processors in a computing unit in which the plurality of first processors that have been scheduled for the first job are located. If there are N other available processors in the computing unit in which the plurality of first processors that have been scheduled for the first job are located, the scheduler 101 may select, based on the computing power topology, N processors from available processors (namely, processors that have not been scheduled for another job) included in the computing unit and schedule the N processors for the first job. In this case, the plurality of processors scheduled for the first job after the computing resource scheduled for the first job is changed have high affinity. As a result, when the plurality of first processors subsequently exchange respective execution results of the first job, communication efficiency is high, and communication overheads are low. If there are not N other available processors in the computing unit in which the plurality of first processors that have been scheduled for the first job are located, the scheduler 101 may select, based on the computing power topology, N processors from available processors included in another computing unit, and schedule the N processors for the first job.

During actual application, because the first target processor scheduled for the first job has executed the first job but does not reach the synchronization point, the second target processor newly scheduled for the first job usually starts to execute the first job again. In this case, content of an operation performed by the first target processor for the first job is invalid, which may be considered that a computing power of the first target processor is wasted in a period when the first job is executed.

Therefore, in a further possible implementation, the scheduler 101 may further determine, based on duration for which the first target processor executes the first job, whether to reschedule the first target processor for the second job. Specifically, when determining that there are a plurality of processors, with computing powers between which a difference does not exceed the threshold, that can meet the requirement of the second job in the remaining available processors in the resource pool 102 after the N first target processors are reclaimed, the scheduler 101 may further determine whether duration for which the N first target processors execute the first job is less than preset duration. The preset duration, for example, is pre-configured by a skilled person, and may be determined based on maximum duration for which execution of the first job is allowed to be delayed. If the duration for which the N first target processors execute the first job is less than preset duration, the scheduler 101 may schedule the N first target processors for the second job as second processors, and select N second target processors from the remaining available processors in the current resource pool 102 and schedule the N second target processors for the first job. In addition, the scheduler 101 further schedules, for the second job based on the computing power topology, a specific quantity of second processors from the remaining available processors in the resource pool 102, so that a quantity of second processors scheduled for the second job meets a requirement for executing the second job in parallel. A difference between computing powers of all the second processors scheduled for the second job does not exceed the threshold. If the duration for which the N first target processors execute the first job is not less than preset duration, or there are not a plurality of processors, with computing powers between which a difference does not exceed the threshold, that can meet the requirement of the second job in the remaining available processors in the resource pool 102 after the N first target processors are reclaimed, the scheduler 101 may schedule, for the second job, a plurality of second processors whose computing powers are as close as possible from the remaining available processors in the current resource pool 102. In this case, a difference between the computing powers of the plurality of second processors scheduled for the second job is allowed to exceed the threshold.

It should be noted that the foregoing implementations are merely used as some examples for description. During actual application, the scheduler 101 may determine, in another manner, that the plurality of processors in the resource pool 102 meet the resource adjustment condition, and schedule corresponding computing resources for the first job and the second job.

In this embodiment, when the scheduler 101 schedules a plurality of processors with close computing powers for different jobs, the different jobs may correspond to different thresholds, and a threshold corresponding to each job is used to constrain a maximum difference between computing powers of a plurality of processors scheduled for the job; or different jobs may correspond to a unified threshold. This is not limited herein.

S605: The plurality of second processors execute the second job in parallel.

In addition, the first job is also executed in parallel by using a plurality of processors. The plurality of processors are specifically a first processor that has been scheduled for the first job but is not changed and the N second target processors scheduled by the scheduler 101 for the first job.

In this embodiment, the scheduler 101 may change some processors that have been scheduled for the first job and reschedule these processors for the second job. In this way, resource scheduling performed for a plurality of jobs can be optimized globally, thereby improving overall effect of resource scheduling performed by the scheduler 101 for the plurality of jobs.

It should be noted that another appropriate step combination that can be figured out by a person skilled in the art based on the content described above also falls within the protection scope of this application. In addition, a person skilled in the art should also be familiar to that embodiments described in this specification are all preferred embodiments, and the related actions are not necessarily required in this application.

The foregoing describes the resource scheduling method provided in embodiments of this application with reference to FIG. 1 to FIG. 6B. The following describes structures of a scheduler and a job scheduling device provided in embodiments of this application with reference to the accompanying drawings.

FIG. 7 is a diagram of a structure of a scheduler. The scheduler 700 includes:
an obtaining module 701, configured to obtain a to-be-processed first job;
a determining module 702, configured to determine, from a resource pool, a plurality of first processors based on a computing power topology, where the resource pool includes a plurality of processors, the computing power topology indicates computing powers of the plurality of processors, and a difference between computing powers of the plurality of first processors does not exceed a threshold; and
a scheduling module 703, configured to schedule the plurality of first processors for the first job, where the first job is executed in parallel based on the plurality of first processors.

In a possible implementation, the determining module 702 is configured to:
determine a plurality of candidate sets based on the computing power topology, where different candidate sets include a same quantity of processors;
determine a computing power topology distance corresponding to each of the plurality of candidate sets, where the computing power topology distance indicates a maximum difference between computing powers of different processors included in the candidate set; and
select a first candidate set from the plurality of candidate sets, where the first candidate set includes the plurality of first processors, and the first candidate set has a smallest computing power topology distance among the plurality of candidate sets.

In a possible implementation, the plurality of first processors are located in a same computing unit.

In a possible implementation, the obtaining module 701 is further configured to obtain a to-be-processed second job.

The scheduling module 703 is further configured to:
when a plurality of processors in the resource pool meet a resource adjustment condition, change, based on the computing power topology, a first target processor in the plurality of first processors scheduled for the first job to a second target processor in the resource pool; and
schedule, for the second job, a plurality of remaining available second processors in the resource pool, where the plurality of second processors include the first target processor.

In a possible implementation, the scheduling module 703 is specifically configured to:
when the plurality of processors in the resource pool meet the resource adjustment condition, and execution duration of the first job on the first target processor is less than preset duration, change, based on the computing power topology, the first target processor in the plurality of first processors scheduled for the first job to the second target processor in the resource pool.

In a possible implementation, the obtaining module 701 is specifically configured to:
obtain the first job in a target queue, where a processor configured to process a job in the target queue is determined based on the computing power topology; or
obtain the first job in response to an enabling operation performed by a user on the first job.

In a possible implementation, the obtaining module 701 is further configured to:
obtain a test job;
separately perform a computing power test on the plurality of processors based on the test job, to obtain computing power test results; and
generate the computing power topology based on the computing power test results respectively corresponding to the plurality of processors.

In a possible implementation, the computing power of the first processor is determined based on a time spent by the first processor on executing the test job.

Because the scheduler 700 shown in FIG. 7 corresponds to the scheduler 101 in embodiments shown in FIG. 3 and FIG. 6A, for a specific implementation of the scheduler 700 shown in FIG. 7 and technical effects thereof, refer to the related descriptions in embodiments shown in FIG. 3 and FIG. 6A. Details are not described herein again.

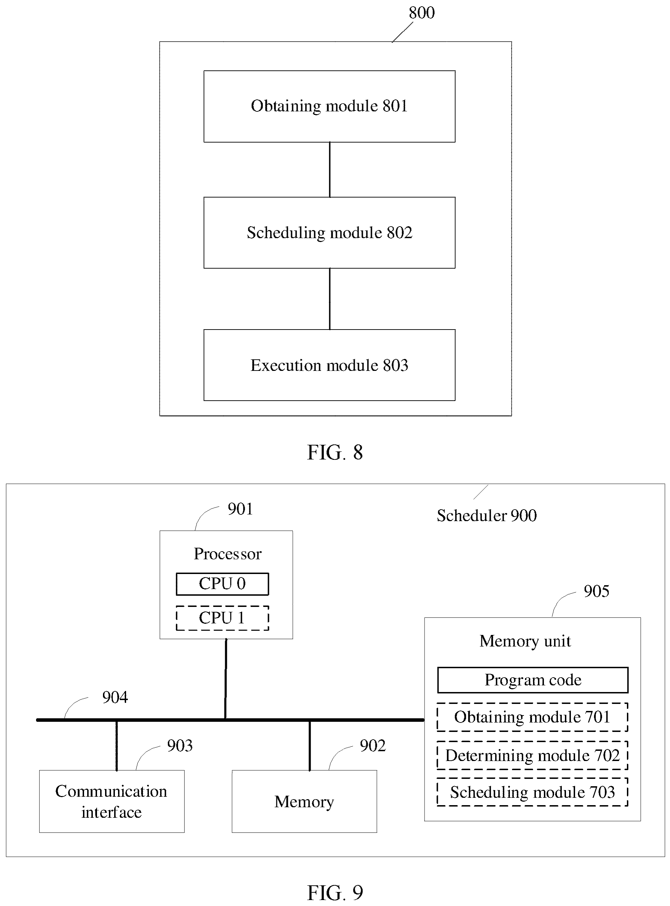

FIG. 8 is a diagram of a structure of a job processing device. The job processing device 800 includes:
an obtaining module 801, configured to obtain a to-be-processed first job;
a scheduling module 802, configured to schedule, for the first job, a plurality of first processors from a resource pool based on a computing power topology, where the resource pool includes a plurality of processors, the computing power topology indicates computing powers of the plurality of processors, and a difference between computing powers of the plurality of first processors does not exceed a threshold; and
an execution module 803, configured to execute the first job in parallel by using the plurality of first processors.

FIG. 9 is a diagram of a hardware structure of a scheduler 900 according to this application. The scheduler 900 may be, for example, the scheduler 101 in embodiments shown in FIG. 3 and FIG. 6A.

As shown in FIG. 9, the scheduler 900 includes a processor 901, a memory 902, and a communication interface 903. The processor 901, the memory 902, and the communication interface 903 communicate with each other through a bus 904, or may implement communication in another manner such as wireless transmission. The memory 902 is configured to store instructions, and the processor 901 is configured to execute the instructions stored in the memory 902. In addition, the scheduler 900 may further include a memory unit 905, and the memory unit 905 may be connected to the processor 901, the storage medium 902, and the communication interface 903 through the bus 904. The memory 902 stores program code, and the processor 901 may invoke the program code stored in the memory 902 to perform the following operations:
obtaining a to-be-processed first job;
determining, from a resource pool, a plurality of first processors based on a computing power topology, where the resource pool includes a plurality of processors, the computing power topology indicates computing powers of the plurality of processors, and a difference between computing powers of the plurality of first processors does not exceed a threshold; and
scheduling the plurality of first processors for the first job, where the first job is executed in parallel based on the plurality of first processors.

It should be understood that in this embodiment of this application, the processor 901 may be a CPU, or the processor 901 may be another general-purpose processor, a digital signal processor (DSP), an application-specific integrated circuit (ASIC), a field-programmable gate array (FPGA), or another programmable logic device, a discrete gate, a transistor logic device, a discrete device component, or the like. The general-purpose processor may be a microprocessor, any conventional processor, or the like.

The memory 902 may include a read-only memory and a random access memory, and provides instructions and data to the processor 901. The memory 902 may further include a non-volatile random access memory.

The memory 902 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The communication interface 903 is configured to communicate with another device connected to the scheduler 900. In addition to a data bus, the bus 904 may further include a power bus, a control bus, a status signal bus, and the like. However, for clear description, various types of buses in the figure are denoted as the bus 904.

It should be understood that the scheduler 900 according to this embodiment of this application may correspond to the scheduler 700 in embodiments of this application, and may correspond to the methods performed by the scheduler 101 in the methods shown in FIG. 3 and FIG. 6A in embodiments of this application. The foregoing and other operations and/or functions implemented by the scheduler 900 are respectively used to implement the procedures of the corresponding methods in FIG. 3 and FIG. 6A. For brevity, details are not described herein again.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct a computing device to perform the resource scheduling method.

An embodiment of this application further provides a computer program product. The computer program product includes one or more computer instructions. When the computer instructions are loaded and executed on a computing device, the procedures or functions according to embodiments of this application are all or partially generated.

The computer instructions may be stored in a computer-readable storage medium, or may be transmitted from a computer-readable storage medium to another computer-readable storage medium. For example, the computer instructions may be transmitted from a website, a computer, or a data center to another website, computer, or data center in a wired (for example, a coaxial cable, an optical fiber, or a digital subscriber line (DSL)) or wireless (for example, infrared, radio, or microwave) manner.

The computer program product may be a software installation package. When any method of the foregoing resource scheduling method needs to be used, the computer program product may be downloaded and executed on a computing device.

All or some of the foregoing embodiments may be implemented using software, hardware, firmware, or any combination thereof. When software is used to implement embodiments, the foregoing embodiments may be implemented completely or partially in a form of a computer program product. The computer program product includes one or more computer instructions. When the computer program instructions are loaded or executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, including one or more usable media collections. The usable medium may be a magnetic medium (for example, a floppy disk, a hard disk, or a magnetic tape), an optical medium (for example, a DVD), or a semiconductor medium. The semiconductor medium may be a solid-state drive.

The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A resource scheduling method, wherein the method comprises:
obtaining a to-be-processed first job;
determining, from a resource pool, a plurality of first processors based on a computing power topology, wherein the resource pool comprises a plurality of processors, the computing power topology indicates computing powers of the plurality of processors, and a difference between computing powers of the plurality of first processors does not exceed a threshold; and
scheduling the plurality of first processors for the first job, wherein the first job is executed in parallel based on the plurality of first processors.

2. The method according to claim 1, wherein the determining, from the resource pool, the plurality of first processors based on the computing power topology comprises:
determining a plurality of candidate sets based on the computing power topology, wherein different candidate sets comprise a same quantity of processors;
determining a computing power topology distance corresponding to each of the plurality of candidate sets, wherein the computing power topology distance indicates a maximum difference between computing powers of different processors comprised in the candidate set; and
selecting a first candidate set from the plurality of candidate sets, wherein the first candidate set comprises the plurality of first processors, and the first candidate set has a smallest computing power topology distance among the plurality of candidate sets.

3. The method according to claim 2, wherein the plurality of first processors are located in a same computing unit.

4. The method according to any one of claims 1 to 3, wherein the method further comprises:
obtaining a to-be-processed second job; and
when a plurality of processors in the resource pool meet a resource adjustment condition, changing, based on the computing power topology, a first target processor in the plurality of first processors scheduled for the first job to a second target processor in the resource pool; and
scheduling, for the second job, a plurality of remaining available second processors in the resource pool, wherein the plurality of second processors comprise the first target processor.

5. The method according to claim 4, wherein the changing, based on the computing power topology, the first target processor in the plurality of first processors scheduled for the first job to the second target processor in the resource pool when the plurality of processors in the resource pool meet the resource adjustment condition comprises:
when the plurality of processors in the resource pool meet the resource adjustment condition, and execution duration of the first job on the first target processor is less than preset duration, changing, based on the computing power topology, the first target processor in the plurality of first processors scheduled for the first job to the second target processor in the resource pool.

6. The method according to any one of claims 1 to 5, wherein the obtaining the to-be-processed first job comprises:
obtaining the first job in a target queue, wherein a processor configured to process a job in the target queue is determined based on the computing power topology; or
obtaining the first job in response to an enabling operation performed by a user on the first job.

7. The method according to any one of claims 1 to 6, wherein the method further comprises:
obtaining a test job;
separately performing a computing power test on the plurality of processors based on the test job, to obtain computing power test results; and
generating the computing power topology based on the computing power test results respectively corresponding to the plurality of processors.

8. The method according to any one of claims 1 to 7, wherein the computing power of the first processor is determined based on a time spent by the first processor on executing the test job.

9. A job processing method, wherein the method comprises:
obtaining a to-be-processed first job;
scheduling, for the first job, a plurality of first processors from a resource pool based on a computing power topology, wherein the resource pool comprises a plurality of processors, the computing power topology indicates computing powers of the plurality of processors, and a difference between computing powers of the plurality of first processors does not exceed a threshold; and
executing the first job in parallel by using the plurality of first processors.

10. A scheduler, wherein the scheduler comprises:
an obtaining module, configured to obtain a to-be-processed first job;
a determining module, configured to determine, from a resource pool, a plurality of first processors based on a computing power topology, wherein the resource pool comprises a plurality of processors, the computing power topology indicates computing powers of the plurality of processors, and a difference between computing powers of the plurality of first processors does not exceed a threshold; and
a scheduling module, configured to schedule the plurality of first processors for the first job, wherein the first job is executed in parallel based on the plurality of first processors.

11. A job processing device, wherein the job processing device comprises:
an obtaining module, configured to obtain a to-be-processed first job;
a scheduling module, configured to schedule, for the first job, a plurality of first processors from a resource pool based on a computing power topology, wherein the resource pool comprises a plurality of processors, the computing power topology indicates computing powers of the plurality of processors, and a difference between computing powers of the plurality of first processors does not exceed a threshold; and
an execution module, configured to execute the first job in parallel by using the plurality of first processors.

12. A scheduler, comprising a processor and a memory, wherein
the processor is configured to execute instructions stored in the memory, to cause the scheduler to perform the steps of the method according to any one of claims 1 to 8.

13. A job processing system, comprising the scheduler according to claim 12 and a resource pool, wherein the resource pool comprises a plurality of processors.

14. A computer-readable storage medium, comprising instructions, wherein when the instructions are run on a computing device, the computing device is caused to perform the method according to any one of claims 1 to 9.
